(19) Europäisches Patentamt

European Patent Office

Office européen des brevets

(11) **EP 4 560 902 B1**

## (12) EUROPEAN PATENT SPECIFICATION

(45) Date of publication and mention
of the grant of the patent:
**22.07.2026 Bulletin 2026/30**

(21) Application number: **23211426.4**

(22) Date of filing: **22.11.2023**

(51) International Patent Classification (IPC):
*H02M 1/00* (2006.01)        *H02M 3/00* (2006.01)
*H02M 3/335* (2006.01)        *H02M 1/32* (2007.01)
*H02M 1/36* (2007.01)

(52) Cooperative Patent Classification (CPC):
**H02M 3/01; H02M 1/0009; H02M 1/0025;
H02M 3/33571; H02M 3/33573;** H02M 1/0035;
H02M 1/32; H02M 1/36; H02M 3/33523; Y02B 70/10

(54) **A CONTROLLER FOR A RESONANT CONVERTER**

STEUERUNG FÜR EINEN RESONANZWANDLER

CONTRÔLEUR POUR CONVERTISSEUR RÉSONANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**28.05.2025 Bulletin 2025/22**

(73) Proprietor: **NXP USA, Inc.
Austin TX 78735 (US)**

(72) Inventors:
• **TWELKEMEIJER, Remco
5656 AG Eindhoven (NL)**
• **HALBERSTADT, Hans
5656 AG Eindhoven (NL)**
• **RENS, Frank Van
5656 AG Eindhoven (NL)**

(74) Representative: **Schwarzweller, Thomas
NXP Semiconductors Germany GmbH
Intellectual Property Group
Beiersdorfstraße 12
22529 Hamburg (DE)**

(56) References cited:
**EP-A1- 2 661 804        EP-B1- 2 661 804**
**US-A1- 2007 018 618        US-A1- 2020 195 151**
**US-A1- 2023 056 448**

## Description

### Field

The present disclosure relates to controllers for resonant converter, and associated methods.

### Prior Art

The following Patent Literature is considered relevant background art for this invention:

US2023/056448 A1
EP 2 661 804 A1
US 2020/19515 A1
US 2007/018618 A1

### Summary

According to a first aspect of the present disclosure there is provided a controller for a resonant converter, the resonant converter comprising:

a first switch and a second switch connected in series with each other between the supply source and a reference terminal; and
a resonant tank that is electrically connected to the first and second switches, wherein the resonant tank comprises a resonant capacitor; wherein the controller is configured to:
determine voltage-correction-signalling based on a measured current signal, which represents a current flowing in the resonant tank;
either derive a voltage signal from said measured current signal or measure said voltage signal, which represents a voltage at a predetermined point in the resonant tank; and
in response to the voltage signal crossing a voltage threshold value, after the application of the voltage-correction-signalling to either the voltage signal or the voltage threshold value as an offset, change the state of the first switch and the second switch.

In one or more embodiments, the controller is further configured to:

combine the voltage-correction-signalling with a measured voltage signal to provide corrected-voltage-signalling, wherein the measured voltage signal represents the voltage at a predetermined point in the resonant tank; and
either or both of:

i) in response to the corrected-voltage-signalling exceeding an upper voltage threshold value, open the first switch and close the second switch; and
ii) in response to the corrected-voltage-signalling dropping below the lower voltage threshold value, open the second switch and close the first switch.

In one or more embodiments, the controller is configured to:

receive the measured current signal; and
determine the measured voltage signal by integrating the measured current signal.

In one or more embodiments, the controller is configured to:

receive the measured voltage signal; and
determine the measured current signal by calculating the differential of the measured voltage signal.

In one or more embodiments, the controller is configured to:
determine the voltage-correction-signalling by multiplying the measured current signal by a compensation factor, which is a constant.
In one or more embodiments, the controller is configured to:
determine the value of a compensation-factor, for multiplying by the measured current signal to determine the voltage-correction-signalling.

In one or more embodiments, the controller is configured to:

determine a time error based on:

the time difference between i) the measured voltage signal exceeding the upper voltage threshold value; and ii) the consequential opening of the first switch and the closing of the second switch; and / or
the time difference between i) the measured voltage signal dropping below the lower voltage threshold value; and ii) the consequential opening of the second switch and the closing of the first switch;

determine a compensation-factor based on the time error; and
multiply the measured current signal by the compensation-factor to determine the voltage-correction-signalling.

In one or more embodiments, the resonant converter comprises a half-bridge node at the series connection between the first switch and the second switch. The controller may be configured to:
determine the time error based on:

the time difference between i) the measured voltage signal exceeding the upper voltage threshold value; and ii) the time at which the voltage at the half-bridge node subsequently drops below a level that is half of the supply voltage; and / or
the time difference between i) the measured voltage signal dropping below the lower voltage threshold value; and ii) the time at which the voltage at the half-bridge node subsequently exceeds a level that is half of the supply voltage.

In one or more embodiments, the controller is configured to:

store, as a sampled-current-value, the value of the measured current signal at the instant in time that the voltage at the half-bridge node crosses half the supply the voltage for a preceding switching cycle;
multiply the sampled-current-value by the compensation-factor to determine the voltage-correction-signalling.

In one or more embodiments, the controller is configured to:

filter sampled-current-values at instants in time that the voltage at the half-bridge node crosses half the supply the voltage for a plurality of preceding switching cycles to provide an averaged-sampled-current-value; and
multiply the averaged-sampled-current-value by the compensation-factor to determine the voltage-correction-signalling.

In one or more embodiments, the controller is configured to:

add the voltage-correction-signalling to the measured voltage signal to provide a high-side-corrected-voltage-signal;
subtract the voltage-correction-signalling from the measured voltage signal to provide a low-side-corrected-voltage-signal;
in response to the high-side-corrected-voltage-signal exceeding the upper voltage threshold value, open the first switch and close the second switch; and
in response to the low-side-corrected-voltage-signal dropping below the lower voltage threshold value, open the second switch and close the first switch.

There is also disclosed a method of controlling a resonant converter, wherein the resonant converter comprises:

a first switch and a second switch connected in series with each other between the supply source and a reference terminal; and
a resonant tank that is electrically connected to the first and second switches, wherein the resonant tank comprises a resonant capacitor; wherein method comprises:
receiving a measured voltage signal that represents the voltage at a predetermined point in the resonant tank;
determining voltage-correction-signalling based on a measured current signal, which represents the current flowing in the resonant tank; and
in response to the measured voltage signal crossing a voltage threshold value, after the application of the voltage-correction-signalling to either the measured voltage signal or the voltage threshold value as an offset, change the state of the first switch and the second switch.

In one or more embodiments, the method further comprises:

combining the voltage-correction-signalling with a measured voltage signal to provide corrected-voltage-signalling, wherein the measured voltage signal represents the voltage at a predetermined point in the resonant tank;
in response to the corrected-voltage-signalling exceeding an upper voltage threshold value, opening the first switch and closing the second switch; and
in response to the corrected-voltage-signalling dropping below the lower voltage threshold value, opening the second switch and closing the first switch.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

**Brief Description of the Drawings**

One or more embodiments will now be described by way of example only with reference to the accompanying drawings in which:

Figure 1a illustrates a resonant converter and a controller for the resonant converter, which illustrate the principle of Vcap control;
Figure 1b illustrates various signals in the circuit of Figure 1a that also illustrate the principle of Vcap control;
Figure 2 shows an example where a resonant converter controller includes a pin that receives a measured current signal;
Figure 3 shows another example of a controller for a resonant converter;
Figure 4 shows a block diagram of an ideal system for compensating delays;
Figure 5 shows an example embodiment of a controller for a resonant converter according to the present disclosure;
Figure 6 shows a basic circuit of the controller for performing delay compensation according to an aspect of the present disclosure;
Figure 7 shows a plot of the required K (on the vertical axis) versus signal input frequency (on the horizontal axis), for a delay compensation of 150ns;
Figure 8 illustrates how the voltage changes between: the instant in time that the corrected-voltage-signalling (Vcap_corr) exceeds the upper voltage threshold value (t1); and the instant in time that states of the first and the second switches are changed (t2);
Figure 9 shows a regulation loop for delay compensation;
Figure 10 shows an example of how the time error of the loop can be measured;
Figure 11 illustrates another example embodiment of a controller according to the present disclosure;
Figure 12 shows plots of various signals associated with the controller of Figure 11;
Figure 13 illustrates another example embodiment of a controller according to the present disclosure; and
Figure 14 illustrates a method of controlling a resonant converter according to an aspect of the present disclosure.

**Detailed Description**

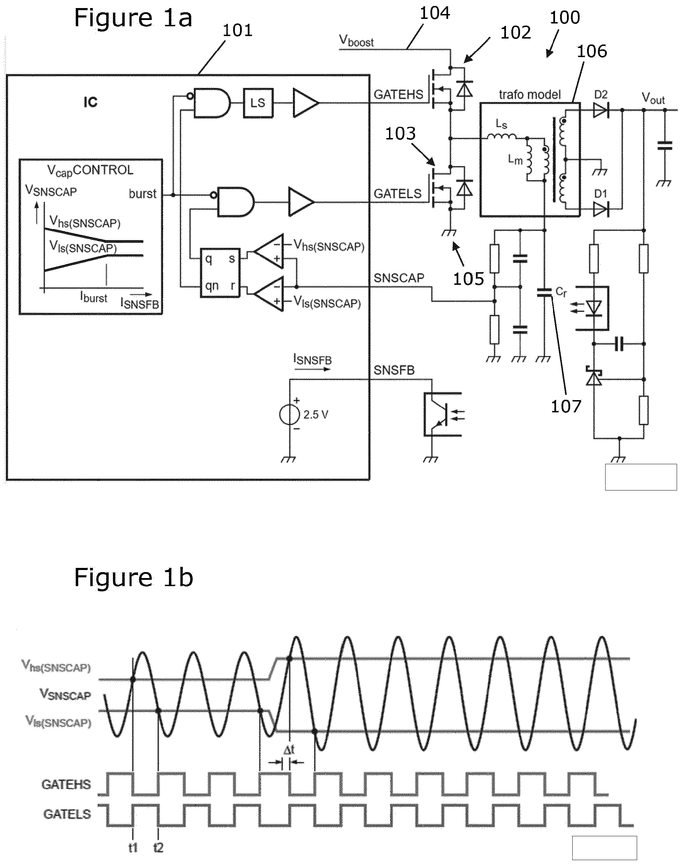

Figure 1a illustrates a resonant converter 100 and a controller 101 for the resonant converter 100, which illustrate the principle of Vcap control. Figure 1b illustrates various signals in the circuit of Figure 1a that also illustrate the principle of Vcap control.

As is known in the art, the resonant converter is for supplying electrical energy from a supply source 104 to a load. The resonant converter 100 includes a first switch 102 and a second switch 103. The first switch 102 and the second switch 103 are connected in series with each other between the supply source 104 and a reference terminal 105. In this example, the reference terminal 105 is ground. The resonant converter includes a half-bridge node at the series connection between the first switch 102 and the second switch 103. The resonant converter 100 has a high-side switch half cycle when the first switch 102 is closed and the second switch 103 is open. The resonant converter 100 has a low-side switch half cycle when the first switch 102 is open and the second switch 103 is closed.

The resonant converter 100 also has a resonant tank that is electrically connected to the first and second switches 102, 103. In this example, the resonant tank includes the primary side of a transformer 106 and a resonant capacitor 107.

The control of the first and second switches 102, 103 is performed via Vcap control, and therefore the voltage across the resonant capacitor 107 is measured. The primary current of the resonant converter 100 can also be measured to implement some functionality, which is described below. As will be discussed below, the measured voltage and the measured current can be combined to provide an opportunity for delay compensation and better power definition.

As shown in Figure 1a, the voltage across the resonant capacitor 107 is measured and compared with levels in the controller 101 (which is illustrated as an integrated circuit (IC) in Figure 1a). Figure 1b shows that: in response to the voltage across the resonant capacitor 107 ($V_{SNSCAP}$) exceeding an upper voltage threshold value ($V_{hs(SNSCAP)}$), the first switch 102 is opened and the second switch 103 is closed; and in response to the voltage across the resonant capacitor 107 ($V_{SNSCAP}$) dropping below a lower voltage threshold value ($V_{ls(SNSCAP)}$), the second switch 103 is opened and the first switch 102 is closed.

As indicated above, in addition to the Vcap control, the primary current of the resonant converter can also be monitored to implement one or more of:

- A start up function: At start-up, when the system slowly increases the difference between the $V_{hs(SNSCAP)}$ level and the $V_{ls(SNSCAP)}$ level, the IC can continuously monitor the primary current. When this current exceeds a predefined level, the increase of the difference of the Vcap level can be put on hold until the current drops below the predefined level.
- To let the system operate near capacitive mode (CMR mode), the primary current can be measured. (As is known in the art, when the difference between the $V_{hs(SNSCAP)}$ level and the $V_{ls(SNSCAP)}$ level (sometimes referred to as deltaV) increases, this results in a larger resonance amplitude. However, a larger amplitude also results in the resonant current getting closer to zero at the end of each half cycle. If the moment that the resonant current gets to zero coincides with finishing the half cycle, this is called the capacitive mode border.)

- An over-current protection.

Figures 1a and 1b illustrate what is known in the art as dual side vcap control. One or more of the examples disclosed herein can also be used with half cycle control. With half cycle control, the voltage across the resonant capacitor is measured at the start of a switching cycle, and then a switching operation is triggered (thereby ending the first half of the switching cycle) when the voltage across the capacitor changes by a threshold amount (which can be referred to as ∆Vcap). The second half of the switching cycle switch is then given the same duration as the first half.

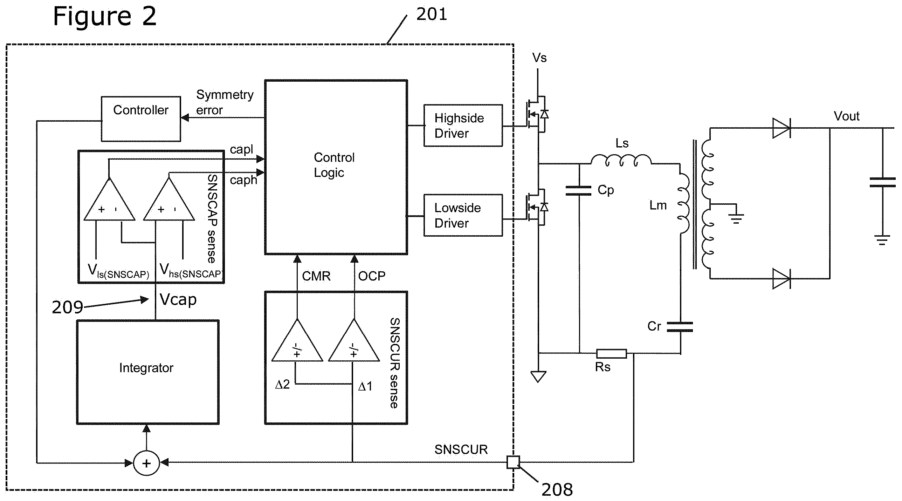

Figure 2 shows an example where a resonant converter controller 201 includes a pin 208 that receives a measured current signal (SNSCUR), which represents current flowing through the resonant tank of the resonant converter. This pin 208 can be referred to as a snscur pin (where snscur represents sensed current). The controller 201 can integrate the current signal (SNSCUR) received at the snscur pin 208 to reconstruct a measured voltage signal (Vcap) 209. This is because the voltage signal (Vcap) 209 is the integral of the current signal (SNSCUR).

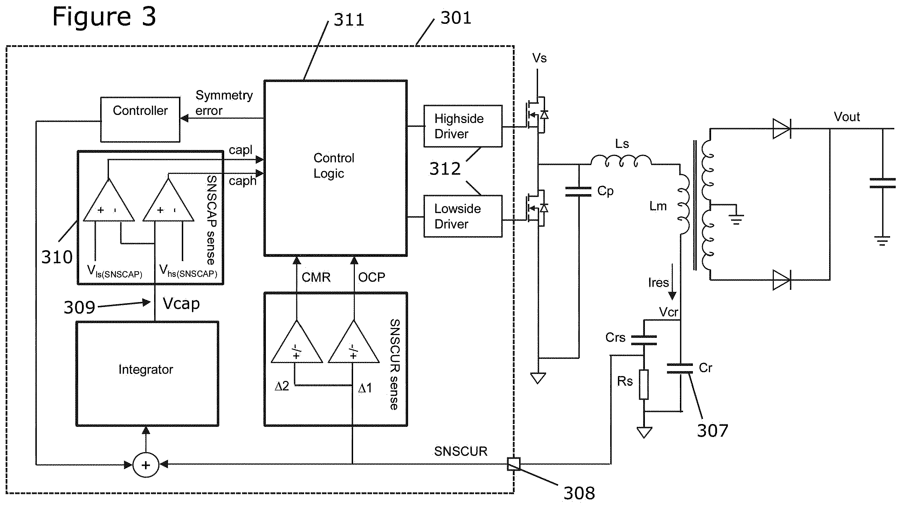

Figure 3 shows another example of a controller 301 for a resonant converter.

In Figure 3, the primary current (Ires) is measured over a sense resistor (Rs) that is parallel with the main resonant capacitor (Cr) 307. This is done to avoid significant power dissipation in the sense resistor (Rs). However, a drawback is that it causes delay in the feedback path as the components that transfer the primary current (Ires) to the measured current signal (SNSCUR) that is received at the snscur pin 308 of the controller 301 act as a low pass filter.

An additional delay can occur within the controller 301 by internal comparators (SNSCAP sense) 310, control logic 311 and driver stages 312. Furthermore, any additional filtering to reduce noise sensitivity can also add to the total delay.

The delay causes an overshoot as the effective voltage signal across the resonant capacitor 307 (Vsnscap) at the switching moment is larger than the upper and lower threshold values ($V_{hs(SNSCAP)}$ and ($VI_{s(SNSCAP)}$). This overshoot could be internally compensated by adapting the $V_{hs(SNSCAP)}$ and $V_{ls(SNSCAP)}$ values in the opposite direction.

There is a direct relationship between the upper and lower voltage threshold values ($V_{hs(SNSCAP)}$ and $V_{ls(SNSCAP)}$) and the output power of the resonant converter. A delay that isn't compensated therefore causes an offset in the output power as a result of incorrect levels for burst-mode transitions, operating modes and protections. The system (e.g., symmetry loop, voltage loop, cycle by cycle) can also become unstable if the delay is too large.

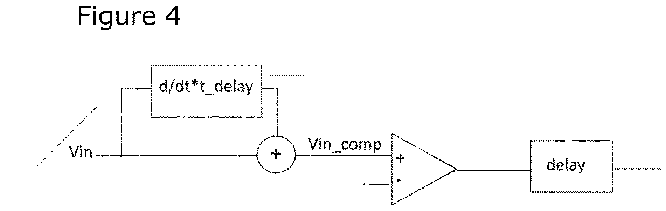

Figure 4 shows a block diagram of an ideal system for compensating the delays that are discussed above.

Assuming a first order linear input signal, the delay can be compensated by adding the derivative to the signal, multiplied by the delay time.

$$Vin_{comp} = Vin + \frac{dVin}{dt} \cdot t\_delay$$

For a resonant power converter where the resonant voltage and the primary current is available, the derivative of the voltage signal is available via the primary current (as the primary current is the derivative of the resonant voltage).

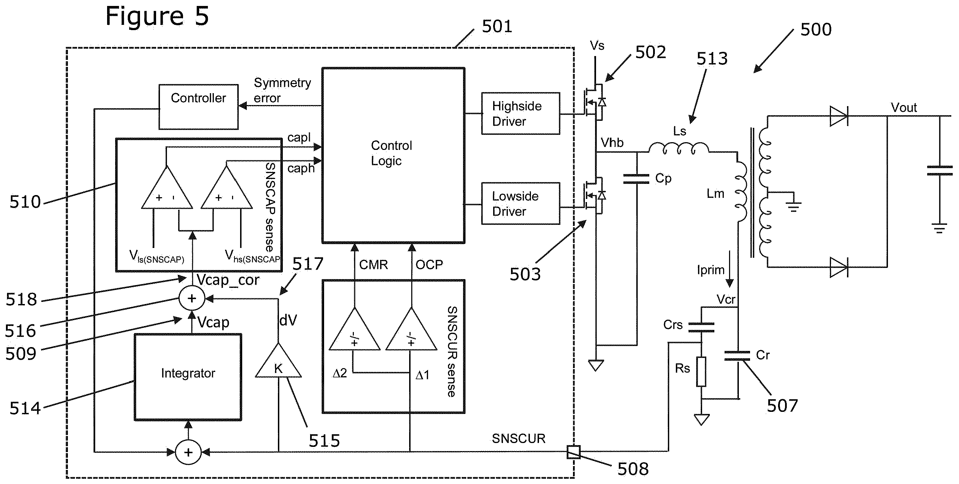

Figure 5 shows an example embodiment of a controller 501 for a resonant converter 500 according to the present disclosure. The controller 501 of Figure 5 implements the delay compensation of Figure 4.

In the example of Figure 5, the controller 501 has a pin 508 that receives a measured current signal (SNSCUR). The measured current signal (SNSCUR) represents the current flowing in the resonant tank. As will be discussed below, the controller 501 then determines a measured voltage signal (Vcap) 509 based on the measured current signal (SNSCUR). The measured voltage signal (Vcap) represents the voltage at a predetermined point in the resonant tank; in this example the voltage across the resonant capacitor 507. In other examples, the controller can receive the measured voltage signal (Vcap) and use it to determine a tank current signal (SNSCUR) - for example, the controller can determine said tank current signal (SNSCUR) by calculating the differential of the measured voltage signal (Vcap). However, such an example can be more susceptible to noise than an example that integrates the measured current signal (SNSCUR). In further examples still, the controller can receive both the measured voltage signal (Vcap) and the measured current signal (SNSCUR), although in such examples the controller may have two pins - one for receiving each of the measured signals.

The controller 501 of Figure 5 includes an integrator 514, which integrates the received measured current signal (SNSCUR) to determine the measured voltage signal (Vcap) 509.

The controller 501 also includes an amplifier 515, which provides a voltage-correction-signalling (dV) 517 based on the measured current signal (SNSCUR). In this example, the amplifier 515 multiplies the measured current signal (SNSCUR) by a compensation-factor K, which in this example is a constant. ('K' in Figure 5 corresponds to t_delay in Figure 4.) In other examples, as will be discussed below, a variable (optionally via a loop) compensation-factor can be used instead of a constant.

The controller 504 then combines the voltage-correction-signalling (dV) 517 with the measured voltage signal (Vcap) 509 to provide corrected-voltage-signalling (Vcap_corr) 518. The controller 501 of Figure 5 includes an adder 516, which adds the voltage-correction-signalling (dV) 517 to the measured voltage signal (Vcap) 509 to provide the corrected-voltage-signalling (Vcap_corr) 518.

The controller 501 then uses the corrected-voltage-signalling (Vcap_corr) 518 for Vcap control. That is:

- in response to the corrected-voltage-signalling (Vcap_corr) 518 exceeding an upper voltage threshold value ($V_{hs(SNSCAP)}$), the controller 501 opens the first switch 502 and closes the second switch 503; and
- in response to the corrected-voltage-signalling (Vcap_corr) 518 dropping below the lower voltage threshold value ($V_{ls(SNSCAP)}$), the controller 501 opens the second switch 503 and closes the first switch 502.

The controller 501 includes two comparators 510 for comparing the corrected-voltage-signalling (Vcap_corr) 518 with the upper and lower voltage threshold values ($V_{hs(SNSCAP)}$, $V_{ls(SNSCAP)}$). These two comparators 510 provide output signals caph, capl that are used to control the states of the first and second switches 502, 503.

In this example, the voltage-correction-signalling (dV) 517 is combined with the measured voltage signal (Vcap) 509 to provide corrected-voltage-signalling (Vcap_corr) 518. In an alternative example, the voltage-correction-signalling (dV) 517 can be combined with one or both of the upper voltage threshold value ($V_{hs(SNSCAP)}$) and the lower voltage threshold value ($V_{ls(SNSCAP)}$), before the measured voltage signal (Vcap) 509 is compared with those corrected threshold values. That is, it will be appreciated that either of the input signals for each the two comparators 510 can be compensated based on the voltage-correction-signalling (dV) 517 in order to achieve the same result.

voltage-correction-signalling with a measured voltage signal to provide corrected-voltage-signalling, wherein the measured voltage signal represents the voltage at a predetermined point in the resonant tank; and either or both of:

i) in response to the corrected-voltage-signalling exceeding an upper voltage threshold value, open the first switch and close the second switch; and
ii) in response to the corrected-voltage-signalling dropping below the lower voltage threshold value, open the second switch and close the first switch.

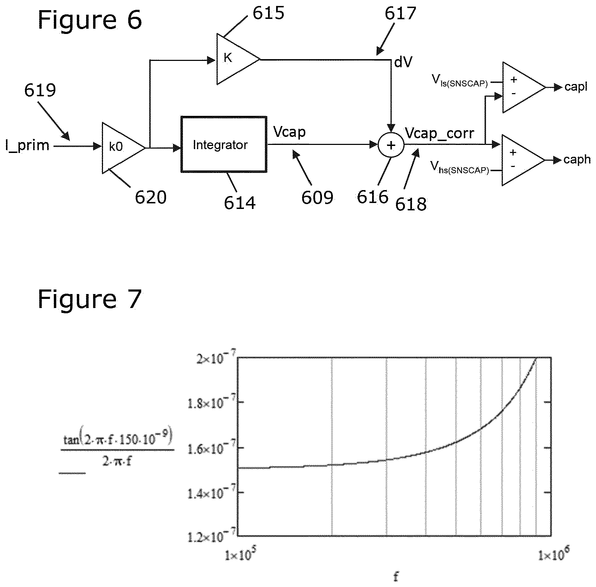

Figure 6 shows a basic circuit of the controller for performing delay compensation according to an aspect of the present disclosure. Features and components of Figure 6 that are also shown in Figure 5 are given corresponding reference number sin the 600 series, and will not necessarily be described in detail again here.

As described above with reference to Figure 5, the primary current (I_prim in Figure 6, SNSCUR in Figure 5) is available and measured. The primary current in Figure 6 is scaled via k0 620. The value that is used for k0 will depend on how the primary current is measured, which is not material to the present disclosure. Integrating the primary current by the integrator 614 results in the Vcap voltage 609, which is not compensated for delays. This voltage 609 can be generated internally by integrating the primary current (as shown in Figure 6) or it can be measured externally. Multiplying the compensated primary current by K 615 results in the voltage-correction-signalling (dV) 617, which is a voltage offset for timing correction.

The compensated delay can be calculated via the Laplace transfer (neglecting k0) of the block diagram of Figure 6 as:

$$H(s) = \frac{Vcap\_cor}{I\_prim} = \frac{Ks + 1}{s}$$

For the delay compensation, only the zero is important as the pole gives a fixed value of 90 degrees phase shift. Resulting in a compensated delay by taking the argument of the Laplace function. The constant compensation-factor K can be derived from the compensated delay.

$$t_{comp} = \frac{atan(2\pi f \cdot K)}{2\pi f}$$

$$K = \frac{tan(2\pi f \cdot t_{comp})}{2\pi f}$$

As shown, the constant compensation-factor K depends on the frequency of the signal and the requested delay. By approximation, the tangent function is equal to the input for small inputs, which means that K is by approximation equal to $t_{comp}$ when $t_{comp}$ is smaller than 0.05/f.

Figure 7 shows a plot of the required K (on the vertical axis) versus signal input frequency (on the horizontal axis), for a delay compensation of 150ns.

As shown, the required value of K significantly changes depending on the frequency. For a high frequency LLC converter (i.e., a resonant converter that has two inductors and one capacitor in its resonant tank), this effect becomes dominant. Consequently, there is a benefit to changing the value of K depending on the actual frequency of interest. Besides that, the requested delay compensation ($t_{comp}$) can change due to temperature effects and or different modes of operation of the converter.

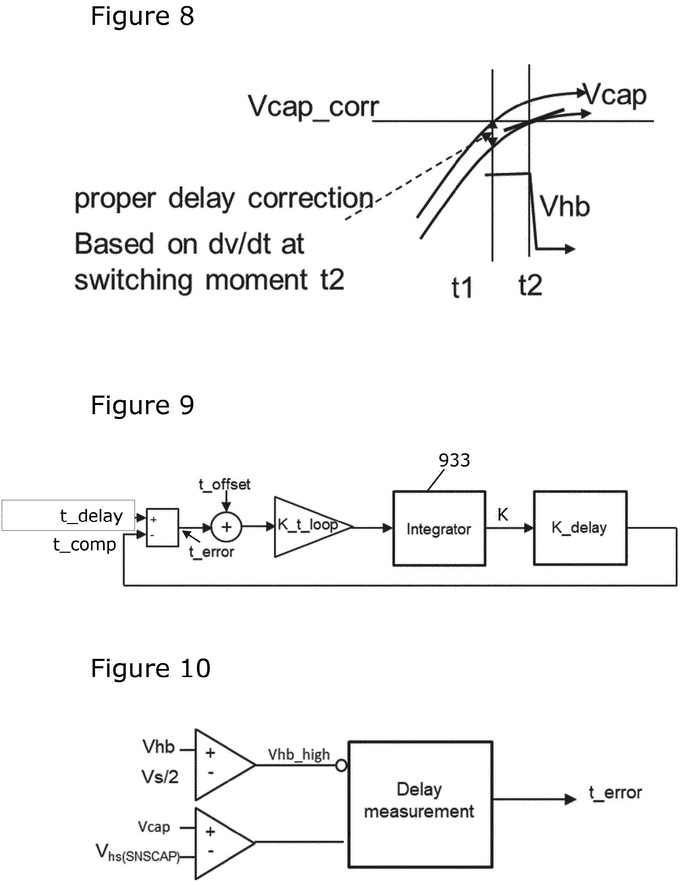

Figure 8 illustrates how the current changes between: the instant in time that the corrected-voltage-signalling (Vcap_corr) exceeds the upper voltage threshold value (t1); and the instant in time that the states of the first and the second switches are changed (t2).

The delay correction described above can work well assuming a constant dv/dt of the Vcap signal, as explained with reference to Figure 4. Also, a sinewave frequency below approximately 0.05/t_comp can be compensated correctly, as shown in Figure 7. However, the Vcap signal is not based on a constant dv/dt and in some examples the frequency can contain much more higher harmonics. The result (as shown in Figure 8) is that between the moment of Vcap_corr crossing with the corresponding Vcap level (t1), it still takes the delay time to come to the actual switching moment of the Hb node (t2).

Using then the derivative of Vcap (= resonant current), the dv/dt at t2 is smaller than at t1. So this means that the delay correction would be based on the dv/dt at t1, at which time the dv/dt is larger than at the actual switching moment. For more accurate delay correction, the delay should be based on the value of dv/dt at t2. Otherwise, the result can be an overcompensation of the delay. The amount of overcompensation can be dependent on how close the system operates to the capacitive mode border. At the capacitive mode border the resonant current is zero at t2, so having a dv/dt of zero while the dv/dt at t1 is significantly larger than 0. Analysis of a practical system showed that in this situation an instability can occur when the system comes close to capacitive mode.

A more accurate delay correction can therefore be based on the primary current at t2. However that would result in a causality problem because this current is only present after the decision to change the states of the switches has already been taken. Therefore, in some examples of the present disclosure, as we will now discuss in more detail, the primary current is sampled at t2 and used as replacement for the momentary current to be added to the Vcap signal for the next switching cycle.

One or more of the examples disclosed herein can provide a solution to this problem by sampling the resonant current at the moment that corresponds to t2 in Figure 8 of previous cycles, and use that information to:

> 1. Define the moment t1 based on the Vcap signal with the sampled current added crossing the $V_{hs(SNSCAP)}$ level (for the high-side switch half cycle); and
> 2. Define the moment t1 based on the Vcap signal with the sampled current subtracted crossing the $V_{hl(SNSCAP)}$ level (for the low-side switch half cycle).

In addition, the sampled current can be multiplied by a scaling factor, where the scaling factor is set as result of a local feedback loop comparing the original Vcap signal crossing the Vhs(SNSCAP) with the actual switching moment of the Vhb node. This scaling factor can then be used as a replacement K_delay that is shown in Figure 9. When the delay correction is set properly, then the result will be that the original Vcap signal crossing with Vhs(SNSCAP) and Vhl(SNSCAP) is at exactly the same moment that the Vhb node switches, thereby fully compensating the delay.

Figure 9 shows a regulation loop for delay compensation.

The regulation loop of Figure 9 adaptively regulates the compensation-factor K. The input is t_delay, which is the application and or internal IC delay that is to be compensated for. An error signal, t_error, is obtained by determining the difference between t_delay and t_comp. t_comp is the actual compensated delay by the control loop.

The AC transfer of the delay compensation depends on the frequency of interest and the compensation delay. Assuming a frequency between 10KHz and 1MHz, and a delay of 50ns to 200ns to compensate for, the AC transfer function ( $k_{delay} = \dfrac{\Delta t_{comp}}{\Delta K} = \dfrac{\Delta \dfrac{atan(2\pi f \cdot K)}{2\pi f}}{\Delta K} = \dfrac{1}{4\cdot\pi^2\cdot f^2\cdot K^2+1}$ ) is rather constant somewhere between 0.5 and 1 (k_delay). Taking the integral of the time error (t_error) completes the loop that regulates the value of K. An optional offset compensation can be added (t_offset), which will not effect the stability of the loop).

In this way, the regulation loop of Figure 9 can determine the value of a compensation-factor (K) (where the compensation factor, K, in Figure 9 is not a constant, in contrast to Figure 6). Although not shown in Figure 9, the controller can then multiply the measured current signal (SNSCUR or I_prim) by the compensation-factor (K) to determine the voltage-correction-signalling (Vcap_cor).

The bandwidth (f_bandwidth) of the loop can be set by:

$$K_{t\_loop} = \frac{2\pi\cdot f\_banwidth}{k\_delay}$$

In which case, the time error of the loop may be required, and as a consequence it can be measured.

Figure 10 shows an example of how the time error of the loop can be measured.

This can involve determining when the primary current is the largest and comparing this with the vcap voltage (power level) at that moment. The vcap voltage at the moment the primary current is highest corresponds to the actual power of the converter and should correspond to the internal Vhs(snscap) level. Figure 10 illustrates a block diagram that measures this error by measuring the time difference between: 1) the instant when the voltage on the half bridge node (Vhb, as labelled in Figure 5) is half the voltage of the bus (Vs), and ii) the instant when the uncompensated Vcap voltage reaches the required level (Vhs(snscap)). If there is no time difference between these instants, then the desired result of the uncompensated Vcap voltage crossing the Vhs(snscap) at the same moment that the half bridge node switches has been achieved. The setpoint to compensate for typically does not change fast when the converter is switching in steady state.

More generally, the controller can:
determine the timing error (t_error) based on:

- the time difference between i) the measured voltage signal (Vcap) exceeding the upper voltage threshold value (Vhs); and ii) the time at which the voltage at the half-bridge node subsequently drops below a level that is half of the supply voltage (Vs/2); and / or
- the time difference between i) the measured voltage signal (Vcap) dropping below the lower voltage threshold value (Vls); and ii) the time at which the voltage at the half-bridge node subsequently exceeds a level that is half of the supply voltage (Vs/2).

Not all delays can be compensated however, as there can be a difference in delays in the comparators. Therefore, an offset can be applied to the error (t_offset, as shown in Figure 9).

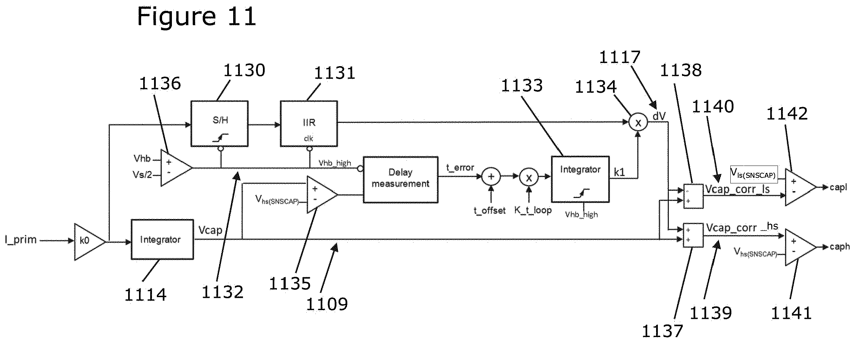

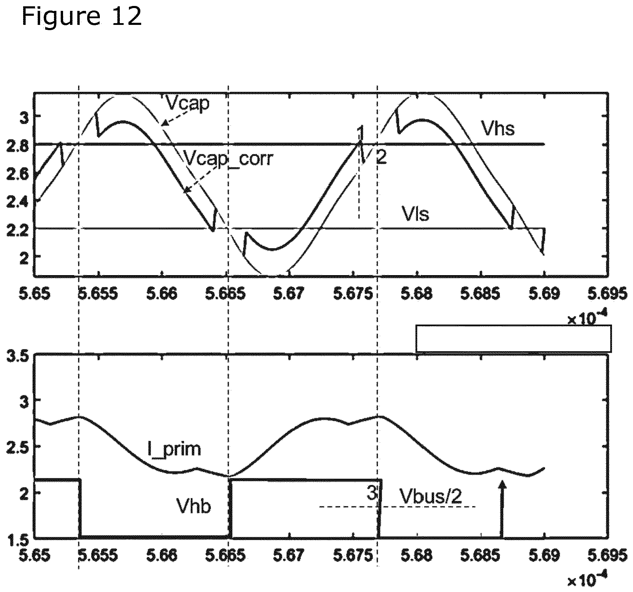

Figure 11 illustrates another example embodiment of a controller according to the present disclosure. Figure 11 includes the functionality of the sampled version, which is described with reference to Figure 8. Figure 12 shows plots of various signals associated with the controller of Figure 11. Features and components of Figure 11 that are illustrated in earlier figures have been given corresponding reference numbers in the 1100 series, and they will not necessarily be described again here.

Figure 11 includes a sample and hold circuit 1130. The sample and hold circuit 1130 stores, as a sampled-current-value, the value of the measured current signal (I_prim) at the instant in time that the voltage at the half-bridge node (Vhb) crosses half the supply the voltage (Vs/2) for a preceding switching cycle. The controller of Figure 11 also includes a multiplication block 1134 that multiplies the sampled-current-value by a compensation-factor (k1), further details of which will be described below, to determine the voltage-correction-signalling (dV) 1117.

Potentially, using the sampled current of a previous cycle could result in an instability when directly applied. This can occur if every small change in current at t2 would give a different sampled value, which is added at the next cycle and thereby introduces again a different switching moment, and therefore also a different sampled current. When this mechanism amplifies itself, there can be an unstable positive feedback loop. Therefore, in Figure 11, an optional IIR (infinite impulse response) low pass filter 1131 is added, which filters the output signal from the sample and hold circuit 113. The IIR filter 1131 can have such a small bandwidth that the effect of a changing sample does not unduly influence the voltage-correction-signalling (dV) 1117, which as discussed above, is added to Vcap 1109, or at least gives such a small positive feedback that any disturbance damps out with an acceptable damping factor.

In this way, the IIR filter 1131 can filter sampled-current-values at instants in time that the voltage at the half-bridge node (Vhb) crosses half the supply the voltage (Vs/2) for a plurality of preceding switching cycles to provide an averaged-sampled-current-value. The multiplication block 1134 can then multiply the averaged-sampled-current-value by the compensation-factor (k1) to determine the voltage-correction-signalling (dV) 1117.

The IIR filter 1131 can be much slower than the loop of the converter and the loop of offset compensation. For example, the sampled value can only be updated once every switching cycle. To ensure the bandwidth of the loops, the IIR low pas filter 1131 can be updated at the same rate as the sample and hold circuit 1130. Updating an integrator 1133 (an integrator 1133 that corresponds to the integrator 933 in Figure 9 ) with the same update rate assists with keeping the loops properly separated from each other. This integrator 1133 works as the integrating part of the regulator, thereby adapting the multiplication factor k1 for the sampled current. As this multiplication factor in fact sets the amount of delay compensation, it therefore forms a closed loop resulting in the steady state situation where the half-bridge node switches over exactly at the moment that the Vcap signal crosses Vhs (or Vls). In Figure 11, a signal that is labelled as Vhb_high 1132 is used for this. The Vhb_high signal 1132 is the output signal from a comparator that compares the voltage at the half-bridge node (Vhb) with half the supply the voltage (Vs/2). However, it will be appreciated that in principle any other signal containing the same information can be used instead. This function can improves the stability of the resonant converter when it is close to capacitive mode. It can also reduce the noise sensitivity of the delay compensation.

In this example, the controller determines a time error (t_error). As shown in Figure 11, the controller determines the time error (t_error) based on the time difference between:

i) the measured voltage signal (Vcap) 1109 exceeding the upper voltage threshold value ($V_{hs(SNSCAP)}$), which is identified in Figure 11 by the output of a comparator 1135; and
ii) the consequential opening of the first switch and the closing of the second switch, which is identified in Figure 11 by the output of a comparator 1136 that compares the voltage at the half-bridge node (Vhb) crosses half the supply the voltage (Vs/2).

Alternatively, or additionally (but not shown in Figure 11), the controller can determine the time error (t_error) based on the time difference between:

i) the measured voltage signal (Vcap) 1109 dropping below the lower voltage threshold value ($V_{ls(SNSCAP)}$); and
ii) the consequential opening of the second switch and the closing of the first switch.

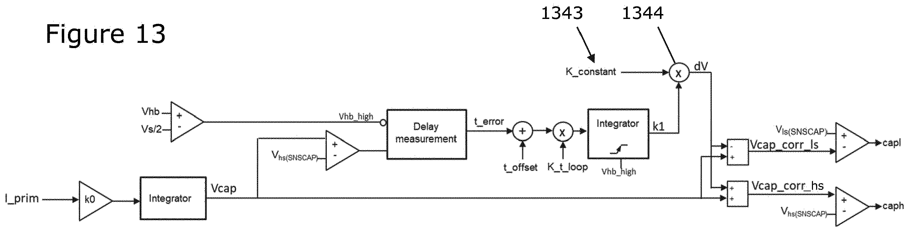

The controller can then determine the compensation-factor (k1) based on the time error (t_error). As discussed above, the multiplication block 1134 multiplies the compensation-factor (k1) by the sampled-current-value or the averaged-sampled-current-value to provide the voltage-correction-signalling (dV) 1117. Alternatively, as shown in Figure 13, a multiplication block 1344 can multiply a constant, K_constant 1343, by the compensation-factor (k1) to determine the voltage-correction-signalling (dV). K_constant 1343 is a simplified version of the sampled current. The sampled-current-value and the averaged-sampled-current-value of Figure 11 are representative of the measured current signal (I_prim), and therefore the multiplication block 1134 can also be considered as multiplying the measured current signal (I_prim) by the compensation-factor (k1).

In the example of Figure 11, the controller performs the following operations on the time error (t_error) in order to provide the compensation-factor (k1):

- apply a time-offset (t_offset) to the time error (t_error). The time-offset (t_offset) can be used to take into account difference in delays between the half cyles. This can be especially useful in examples where the information of 1 half cycle is used, while the delay of the other half cycle can be different. Use of the time-offset (t_offset) can more or less compensate that;
- apply a loop-factor (K_t_loop) to the time error (t_error). The loop-factor (K_t_loop) can be a constant that sets the required gain of the delay regulation loop; and
- integrate the time error (t_error), in this example after both the time-offset (t_offset) and the loop-factor (K_t_loop) have been applied.

In other examples, one or more of these operations may be omitted.

A potential disadvantage of the sample and hold circuit 1130 and the IIR filter 1131 of Figure 11 is that the compensation (dV) now depends on the polarity of the timing compensation in case of dual side Vcap control. A solution for dual side Vcap control is to implement the error compensation twice (once for controlling the first switch and once for controlling the second switch) or to compensate the voltage-correction-signalling (dV) in the opposite direction. An advantage of the second option is that there can be no interference between the two delay compensation loops and it is easy to implement. Figure 11 includes the functionality of compensating the voltage-correction-signalling (dV) in opposite directions for controlling the first and second switches, as we will now describe.

The controller of Figure 11 includes a high-side summation block 1137 that adds the voltage-correction-signalling (dV) 1117 to the measured voltage signal (Vcap) 1109 to provide a high-side-corrected-voltage-signal (Vcap_corr_hs) 1139. The controller also includes a low-side summation block 1138 that subtracts the voltage-correction-signalling (dV) 1117 from the measured voltage signal (Vcap) 1109 to provide a low-side-corrected-voltage-signal (Vcap_corr_ls) 1140.

Then, in response to the high-side-corrected-voltage-signal (Vcap_corr_hs) 1139 exceeding the upper voltage threshold value ($V_{hs(SNSCAP)}$), the controller sets a caph signal such that the controller opens the first switch and closes the second switch. This is performed by a high-side comparator 1141 in Figure 11.

In response to the low-side-corrected-voltage-signal (Vcap_corr_ls) 1140 dropping below the lower voltage threshold value ($V_{ls(SNSCAP)}$), the controller sets a capl signal such that the controller opens the second switch and closes the first switch. This is performed by a low-side comparator 1142 in Figure 11.

In other examples, half cycle control can be used instead of the dual side Vcap control that is shown in Figure 11. In which case, only one of the high-side comparator 1141 and the low-side comparator 1142 will be required.

Figure 12 shows plots of various ones of the signals of Figure 11. It will be appreciated that the high-side-corrected-voltage-signal (Vcap_corr_hs) and the low-side-corrected-voltage-signal (Vcap_corr_ls) have been combined into a single representation in Figure 12 that is identified as "Vcap_corr".

Figure 12 shows how the correction term behaves as a constant being positive during the high side half cycle and the same value, but negative, during the low side half cycle. It can also be seen that the decision to change the states of the first and second switches is taken based on Vcap_corr crossing one of the thresholds (either Vhs or Vls), while a moment later the Vcap signal crosses the Vhs or the Vls signal exactly at the moment that also the voltage at the half bridge node (Vhb) crosses Vbus/2. As the difference between Vcap at both moments that Vhb switches and crosses Vbus/2, this means that in Figure 11 the proper power is delivered by the converter as dictated by Vhs, Vls.

Figure 13 illustrates another example embodiment of a controller according to the present disclosure. The circuit of Figure 13 is similar to the one of Figure 11, but it does not include a sample and hold circuit or an IIR filter.

As the local feedback loop related to Figure 11 regulates to the proper delay correction at a steady state solution, one could ask why the sampled current is needed. However, as discussed with reference to Figure 8, the dv/dt at t2 (in Figure 8) is proportional to the current at t2. Therefore, once settled to the proper scaling factor, the proper delay correction is maintained when instantly changing to another load with another current at t2. In which case, the local feedback loop does not need to correct. However, it has been found that it is not necessary to take a sample of the measured current; instead use of a constant fixed value (K_constant) 1343 instead can work. The local feedback loop can still regulate to the proper scaling factor to reach optimum delay correction. Therefore, in the example of Figure 13, the sample and hold circuit and the IIR filter of Figure 11 are not required.

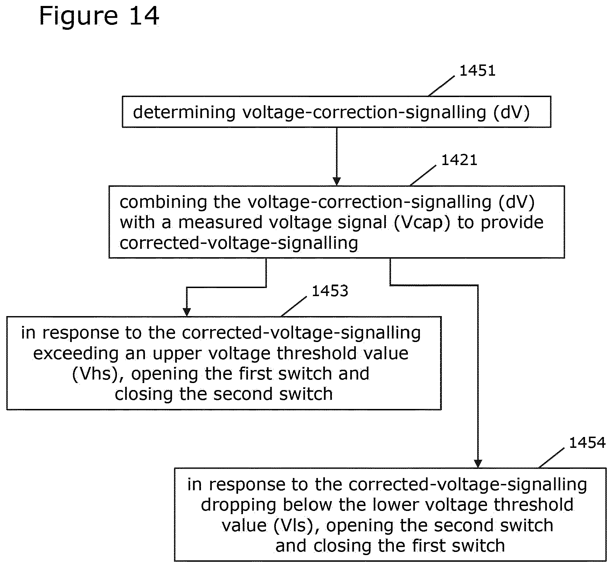

Figure 14 illustrates a method of controlling a resonant converter according to an aspect of the present disclosure. As discussed in detail above, the resonant converter comprises: a first switch and a second switch connected in series with each other between the supply source and a reference terminal; and a resonant tank that is electrically connected to the first and second switches. The resonant tank comprises a resonant capacitor.

At step 1451, the method comprises determining voltage-correction-signalling (dV) based on a measured current signal, which represents the current flowing in the resonant tank. This may be measured directly from the resonant converter or it may be determined based on a different measured signal.

At step 1452, the method involves combining the voltage-correction-signalling (dV) with a measured voltage signal (Vcap) to provide corrected-voltage-signalling. The measured voltage signal (Vcap) represents the voltage at a predetermined point in the resonant tank. This may be measured directly from the resonant converter or it may be determined based on a different measured signal. As discussed above, the corrected-voltage-signalling may be a single signal (Vcap_corr). Or, the corrected-voltage-signalling may include pair of signals (Vcap_corr_ls and Vcap_corr_hs).

At step 1453, in response to the corrected-voltage-signalling exceeding an upper voltage threshold value (Vhs), the method involves opening the first switch and closing the second switch.

At steps 1454, in response to the corrected-voltage-signalling dropping below the lower voltage threshold value (Vls), the method involves opening the second switch and closing the first switch.

One or more of the applications described herein can be used in any application where a resonant converter is used. Including, but not limited to:

- Adapters
- Televisions
- Gaming
- Lighting
- Automotive.

The present disclosure relates to one or more of:

1. A resonant power converter which uses Vcap control and where delays are compensated via the primary current signal resulting in a correct power measurement.
2. The compensation can be fixed or regulated via an internal or external loop.
3. The compensation being based on a constant with a scaling factor used being set by a local feedback .
4. The primary current is sampled at the crossing moment of Vcaprecon with the vcap crossing level (Vhs, or Vls) and used to set a second part of the scaling factor (Figure 8) .
5. The delay can be measured when the HB node changes polarity or via any other method resulting in the same result.
6. Filtering can be applied to the primary current signal to avoid interference with other loops.
7. The delay compensation can be done with dual Vcap control.
8. The delay compensation can be done with single sided Vcap control.
9. The Vcap can be an external pin or via an internal integration of the primary current signal.
10. Because Vcap control is used, all modes related to this control mechanism can still be used.
11. The converter can be an LLC converter.
12. The converter can be another type of resonant converter which supports Vcap control.
13. The converter can be a half bridge converter.
14. The converter a can be a full bridge converter.

Examples disclosed herein include one or more of the following features:

- Compensate for a delay based on the derivative of the Vsnscap signal to perform a correct power measurement and ensure loop stability.
- Using the resonant current as representation of the derivative of the Vsnscap signal.
- Regulate the delay compensation according to the actual delay error.
- Filtering to avoid interference with other loops.
- Using of Vs/2 crossing as representation of effective Vcap level.
- Using a sampled version of the resonant current as representation of the derivative of the Vsnscap signal.
- Using a constant of the resonant current as representation of the derivative of the Vsnscap signal.

In the control of a resonant power converter, a control method can be used that makes use of the voltage across the resonant capacitor. Furthermore, the resonant current can be measured, such that the converter can operate near capacitive mode or the current in the converter can be limited. The presence of delays results in power measurement errors and consequently in incorrect power operating thresholds. Examples disclosed herein can address the problem of the delays in the power measurement by using the voltage over the resonant capacitor and current through the resonant capacitor.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments. The invention is only limited by the scope of the appended claims.

**Claims**

1. A controller (201, 301, 501) for a resonant converter (100), the resonant converter comprising:

   a first switch (102, 502) and a second switch (103, 503) connected in series with each other between a supply source (104, Vs) and a reference terminal (105); and
   a resonant tank that is electrically connected to the first and second switches, wherein the resonant tank comprises a resonant capacitor (107, Cr);

   wherein the controller is configured to:

   determine voltage-correction-signalling (dV) based on a measured current signal (SNSCUR), which represents a current flowing in the resonant tank;
   either derive a voltage signal (Vcap) from said measured current signal or measure said voltage signal, which represents a voltage at a predetermined point in the resonant tank; and in response to the voltage signal crossing a voltage threshold value (Vhs(SNSCAP), (Vls(SNSCAP))),
   after the application of the voltage-correction-signalling to either the voltage signal or the voltage threshold value as an offset, change the state of the first switch and the second switch.

2. The controller of claim 1, further configured to:

   combine the voltage-correction-signalling with the measured voltage signal to provide corrected-voltage-signalling (Vcap_corr), wherein the measured voltage signal represents the voltage at a predetermined point in the resonant tank; and
   either or both of:

   i) in response to the corrected-voltage-signalling exceeding an upper voltage threshold value, open the first switch and close the second switch; and
   ii) in response to the corrected-voltage-signalling dropping below the lower voltage threshold value, open the second switch and close the first switch.

**3.** The controller of claim 1, wherein the controller is configured to:

receive the measured current signal; and
determine said voltage signal by integrating the measured current signal.

**4.** The controller of claim 2, wherein the controller is configured to:

receive the measured voltage signal; and
determine a tank current signal by calculating the differential of the measured voltage signal.

**5.** The controller of claims 1-3 wherein the controller is configured to:
determine the voltage-correction-signalling by multiplying the measured current signal by a compensation factor, which is a constant.

**6.** The controller of any one of claims 1 to 3 and 5 wherein the controller is configured to:
determine the value of a compensation-factor (K), for multiplying by the measured current signal to determine the voltage-correction-signalling.

**7.** The controller of claim 6 when it depends on claim 2, wherein the controller is configured to:

determine a time error based on:

the time difference between i) the measured voltage signal exceeding the upper voltage threshold value; and ii) the consequential opening of the first switch and the closing of the second switch; and / or
the time difference between i) the measured voltage signal dropping below the lower voltage threshold value; and ii) the consequential opening of the second switch and the closing of the first switch;

determine a compensation-factor based on the time error; and
multiply the measured current signal by the compensation-factor to determine the voltage-correction-signalling.

**8.** The controller of claim 7, wherein:

the resonant converter comprises a half-bridge node at the series connection between the first switch and the second switch;
the controller is configured to:
determine the time error based on:

the time difference between i) the measured voltage signal exceeding the upper voltage threshold value; and ii) the time at which the voltage at the half-bridge node subsequently drops below a level that is half of the supply voltage; and / or
the time difference between i) the measured voltage signal dropping below the lower voltage threshold value; and ii) the time at which the voltage at the half-bridge node subsequently exceeds a level that is half of the supply voltage.

**9.** The controller of any one of claims 1 to 3 and 5-8 wherein the controller is configured to:

store, as a sampled-current-value, the value of the measured current signal at the instant in time that the voltage at the half-bridge node crosses half the supply the voltage for a preceding switching cycle;
multiply the sampled-current-value by the compensation-factor to determine the voltage-correction-signalling.

**10.** The controller of claim 9, wherein the controller is configured to:

filter sampled-current-values at instants in time that the voltage at the half-bridge node crosses half the supply the voltage for a plurality of preceding switching cycles to provide an averaged-sampled-current-value; and
multiply the averaged-sampled-current-value by the compensation-factor to determine the voltage-correction-signalling.

**11.** The controller of claims 2 to 4, wherein the controller is configured to:

add the voltage-correction-signalling to said voltage signal to provide a high-side-corrected-voltage-signal;
subtract the voltage-correction-signalling from said voltage signal to provide a low-side-corrected-voltage-signal;
in response to the high-side-corrected-voltage-signal exceeding the upper voltage threshold value, open the first switch and close the second switch; and
in response to the low-side-corrected-voltage-signal dropping below the lower voltage threshold value, open the second switch and close the first switch.

12. A method of controlling a resonant converter, wherein the resonant converter comprises:

a first switch (102, 502) and a second switch (103, 503) connected in series with each other between the supply source (104, Vs) and a reference terminal (105); and
a resonant tank that is electrically connected to the first and second switches, wherein the resonant tank comprises a resonant capacitor (107, Cr);

wherein the method comprises:

determining voltage-correction-signalling (dV) based on a measured current signal (SNSCUR), which represents a current flowing in the resonant tank;
either derive a voltage signal (Vcap) from said measured current signal or measure said voltage signal, which represents a voltage at a predetermined point in the resonant tank;
and
in response to the voltage signal crossing a voltage threshold value (Vhs(SNSCAP), (Vls(SNSCAP))), after the application of the voltage-correction-signalling to either the voltage signal or the voltage threshold value as an offset, change the state of the first switch and the second switch.

13. The method of claim 12, further comprising:

combining the voltage-correction-signalling with the measured voltage signal to provide corrected-voltage-signalling (Vcap_corr), wherein the measured voltage signal represents the voltage at a predetermined point in the resonant tank;
in response to the corrected-voltage-signalling exceeding an upper voltage threshold value, opening the first switch and closing the second switch; and
in response to the corrected-voltage-signalling dropping below the lower voltage threshold value, opening the second switch and closing the first switch.

**Patentansprüche**

1. Steuerung (201, 301, 501) für einen Resonanzwandler (100), wobei der Resonanzwandler umfasst:

einen ersten Schalter (102, 502) und einen zweiten Schalter (103, 503), die zwischen einer Versorgungsquelle (104, Vs) und einem Referenzanschluss (105) in Reihe miteinander verbunden sind; und
einen Resonanztank, der elektrisch mit dem ersten und dem zweiten Schalter verbunden ist, wobei der Resonanztank einen Resonanzkondensator (107, Cr) umfasst;
wobei die Steuerung ausgelegt ist zum:

Bestimmen einer Spannungskorrektursignalisierung (dV) basierend auf einem gemessenen Stromsignal (SNSCUR), das einen in dem Resonanztank fließenden Strom repräsentiert;
entweder Ableiten eines Spannungssignals (Vcap) aus dem gemessenen Stromsignal oder Messen des Spannungssignals, das eine Spannung an einem vorbestimmten Punkt im Resonanztank repräsentiert; und
als Reaktion darauf, dass das Spannungssignal einen Spannungsschwellenwert (Vhs(SNSCAP), (Vls(SNSCAP))) durchquert, nach dem Anwenden der Spannungskorrektursignalisierung an entweder dem Spannungssignal oder dem Spannungsschwellenwert als einen Offset, Ändern des Zustands des ersten Schalters und des zweiten Schalters.

2. Steuerung nach Anspruch 1, die ferner ausgelegt ist zum:

Kombinieren der Spannungskorrektursignalisierung mit dem gemessenen Spannungssignal, um eine korrigierte Spannungssignalisierung (Vcap_corr) bereitzustellen, wobei das gemessene Spannungssignal die Spannung an einem vorbestimmten Punkt in dem Resonanztank repräsentiert; und

eines oder beides von Folgendem:

i) als Reaktion darauf, dass die korrigierte Spannungssignalisierung einen oberen Spannungsschwellenwert überschreitet, Öffnen des ersten Schalters und Schließen des zweiten Schalters; und
ii) als Reaktion darauf, dass die korrigierte Spannungssignalisierung unter den unteren Spannungsschwellenwert fällt, Öffnen des zweiten Schalters und Schließen des ersten Schalters.

3. Steuerung nach Anspruch 1, wobei die Steuerung ausgelegt ist zum:

Empfangen des gemessenen Stromsignals; und
Bestimmen des Spannungssignals durch Integrieren des gemessenen Stromsignals.

4. Steuerung nach Anspruch 2, wobei die Steuerung ausgelegt ist zum:

Empfangen des gemessenen Spannungssignals; und
Bestimmen eines Tankstromsignals durch Berechnen des Differenzials des gemessenen Spannungssignals.

5. Steuerung nach den Ansprüchen 1-3, wobei die Steuerung ausgelegt ist zum:
Bestimmen der Spannungskorrektursignalisierung durch Multiplizieren des gemessenen Stromsignals mit einem Kompensationsfaktor, der eine Konstante ist.

6. Steuerung nach einem der Ansprüche 1 bis 3 und 5, wobei die Steuerung ausgelegt ist zum:
Bestimmen des Werts eines Kompensationsfaktors (K) zum Multiplizieren mit dem gemessenen Stromsignal, um die Spannungskorrektursignalisierung zu bestimmen.

7. Steuerung nach Anspruch 6, wenn von Anspruch 2 abhängig, wobei die Steuerung ausgelegt ist zum:
Bestimmen eines Zeitfehlers basierend auf:

der Zeitdifferenz zwischen i) dem gemessenen Spannungssignal, das den oberen Spannungsschwellenwert überschreitet; und ii) dem sich daraus ergebenden Öffnen des ersten Schalters und Schließen des zweiten Schalters; und/oder
der Zeitdifferenz zwischen i) dem gemessenen Spannungssignal, das unter den unteren Spannungsschwellenwert fällt; und ii) dem sich daraus ergebenden Öffnen des zweiten Schalters und Schließen des ersten Schalters;
Bestimmen eines Kompensationsfaktors basierend auf dem Zeitfehler; und
Multiplizieren des gemessenen Stromsignals mit dem Kompensationsfaktor, um die Spannungskorrektursignalisierung zu bestimmen.

8. Steuerung nach Anspruch 7, wobei:

der Resonanzwandler einen Halbbrückenknoten an der Reihenverbindung zwischen dem ersten Schalter und dem zweiten Schalter umfasst;
die Steuerung ausgelegt ist zum:
Bestimmen den Zeitfehlers basierend auf:

der Zeitdifferenz zwischen i) dem gemessenen Spannungssignal, das den oberen Spannungsschwellenwert überschreitet; und ii) der Zeit, zu der die Spannung an dem Halbbrückenknoten anschließend unter einen Pegel fällt, der die Hälfte der Versorgungsspannung ist; und/oder
der Zeitdifferenz zwischen i) dem gemessenen Spannungssignal, das unter den unteren Spannungsschwellenwert fällt; und ii) der Zeit, zu der die Spannung am Halbbrückenknoten anschließend einen Pegel überschreitet, der die Hälfte der Versorgungsspannung ist.

9. Steuerung nach einem der Ansprüche 1 bis 3 und 5-8, wobei die Steuerung ausgelegt ist zum:

Speichern, als einen abgetasteten Stromwert, des Werts des gemessenen Stromsignals zu dem Zeitpunkt, zu dem die Spannung an dem Halbbrückenknoten die Hälfte der Versorgungsspannung für einen vorhergehenden Schaltzyklus durchquert;
Multiplizieren des abgetasteten Stromwerts mit dem Kompensationsfaktor, um die Spannungskorrektursignalisierung zu bestimmen.

**10.** Steuerung nach Anspruch 9, wobei die Steuerung ausgelegt ist zum:

Filtern von abgetasteten Stromwerten zu Zeitpunkten, zu denen die Spannung an dem Halbbrückenknoten die Hälfte der Versorgungsspannung für eine Vielzahl vorhergehender Schaltzyklen durchquert, um einen gemittelten abgetasteten Stromwert bereitzustellen; und
Multiplizieren des gemittelten abgetasteten Stromwerts mit dem Kompensationsfaktor, um die Spannungskorrektursignalisierung zu bestimmen.

**11.** Steuerung nach den Ansprüchen 2 bis 4, wobei die Steuerung ausgelegt ist zum:

Addieren der Spannungskorrektursignalisierung zu dem Spannungssignal, um ein korrigiertes High-Side-Spannungssignal bereitzustellen;
Subtrahieren der Spannungskorrektursignalisierung von dem Spannungssignal, um ein korrigiertes Low-Side-Spannungssignal bereitzustellen;
als Reaktion darauf, dass das korrigierte High-Side-Spannungssignal den oberen Spannungsschwellenwert überschreitet, Öffnen des ersten Schalters und Schließen des zweiten Schalters; und
als Reaktion darauf, dass das korrigierte Low-Side-Spannungssignal unter den unteren Spannungsschwellenwert fällt, Öffnen des zweiten Schalters und Schließen des ersten Schalters.

**12.** Verfahren zum Steuern eines Resonanzwandlers, wobei der Resonanzwandler umfasst:

einen ersten Schalter (102, 502) und einen zweiten Schalter (103, 503), die zwischen der Versorgungsquelle (104, Vs) und einem Referenzanschluss (105) in Reihe miteinander verbunden sind; und
einen Resonanztank, der elektrisch mit dem ersten und dem zweiten Schalter verbunden ist, wobei der Resonanztank einen Resonanzkondensator (107, Cr) umfasst;
wobei das Verfahren umfasst:

Bestimmen einer Spannungskorrektursignalisierung (dV) basierend auf einem gemessenen Stromsignal (SNSCUR), das einen in dem Resonanztank fließenden Strom repräsentiert;
entweder Ableiten eines Spannungssignals (Vcap) aus dem gemessenen Stromsignal oder Messen des Spannungssignals, das eine Spannung an einem vorbestimmten Punkt im Resonanztank repräsentiert; und
als Reaktion darauf, dass das Spannungssignal einen Spannungsschwellenwert (Vhs(SNSCAP), (Vls(SNSCAP))) durchquert, nach dem Anwenden der Spannungskorrektursignalisierung an entweder dem Spannungssignal oder dem Spannungsschwellenwert als einen Offset, Ändern des Zustands des ersten Schalters und des zweiten Schalters.

**13.** Verfahren nach Anspruch 12, ferner umfassend:

Kombinieren der Spannungskorrektursignalisierung mit dem gemessenen Spannungssignal, um eine korrigierte Spannungssignalisierung (Vcap_corr) bereitzustellen, wobei das gemessene Spannungssignal die Spannung an einem vorbestimmten Punkt in dem Resonanztank repräsentiert;
als Reaktion darauf, dass die korrigierte Spannungssignalisierung einen oberen Spannungsschwellenwert überschreitet, Öffnen des ersten Schalters und Schließen des zweiten Schalters; und
als Reaktion darauf, dass die korrigierte Spannungssignalisierung unter den unteren Spannungsschwellenwert fällt, Öffnen des zweiten Schalters und Schließen des ersten Schalters.

**Revendications**

**1.** Contrôleur (201, 301, 501) pour un convertisseur résonant (100), le convertisseur résonant comprenant :

un premier commutateur (102, 502) et un second commutateur (103, 503) connectés en série l'un à l'autre entre une source d'alimentation (104, Vs) et une borne de référence (105) ; et
un réservoir résonant connecté électriquement aux premier et second commutateurs, dans lequel le réservoir résonant comprend un condensateur résonant (107, Cr) ;
le contrôleur étant configuré pour :

déterminer une signalisation de correction de tension (dV) sur la base d'un signal de courant mesuré (SNSCUR), qui représente un courant circulant dans le réservoir résonant ;
soit dériver un signal de tension (Vcap) à partir dudit signal de courant mesuré, soit mesurer ledit signal de tension, qui représente une tension en un point prédéterminé dans le réservoir résonant ; et
en réponse au franchissement par le signal de tension d'une valeur seuil de tension (Vhs(SNSCAP), (Vls(SNSCAP)), après l'application de la signalisation de correction de tension au signal de tension ou à la valeur seuil de tension en décalage, modifier l'état du premier commutateur et du second commutateur.

2. Contrôleur selon la revendication 1, configuré en outre pour :

combiner la signalisation de correction de tension avec le signal de tension mesuré pour fournir une signalisation de tension corrigée (Vcap_corr), dans lequel le signal de tension mesuré représente la tension en un point prédéterminé dans le réservoir résonant ; et
effectuer l'une ou l'autre des actions suivantes ou les deux :

i) en réponse au dépassement d'une valeur seuil de tension supérieure par la signalisation de tension corrigée, ouvrir le premier commutateur et fermer le second commutateur ; et
ii) en réponse à la chute de la signalisation de tension corrigée en dessous de la valeur seuil de tension inférieure, ouvrir le second commutateur et fermer le premier commutateur.

3. Contrôleur selon la revendication 1, le contrôleur étant configuré pour :

recevoir le signal de courant mesuré ; et
déterminer ledit signal de tension en intégrant le signal de courant mesuré.

4. Contrôleur selon la revendication 2, le contrôleur étant configuré pour :

recevoir le signal de tension mesuré ; et
déterminer un signal de courant de réservoir en calculant le différentiel du signal de tension mesuré.

5. Contrôleur selon les revendications 1 à 3, le contrôleur étant configuré pour :
déterminer la signalisation de correction de tension en multipliant le signal de courant mesuré par un facteur de compensation, qui est une constante.

6. Contrôleur selon l'une quelconque des revendications 1 à 3 et 5, le contrôleur étant configuré pour :
déterminer la valeur d'un facteur de compensation (K), à multiplier par le signal de courant mesuré pour déterminer la signalisation de correction de tension.

7. Contrôleur selon la revendication 6 lorsqu'elle dépend de la revendication 2, le contrôleur étant configuré pour :
déterminer une erreur temporelle sur la base des éléments suivants :

l'écart temporel entre i) le dépassement de la valeur seuil de tension supérieure par le signal de tension mesuré ; et ii) l'ouverture consécutive du premier commutateur et la fermeture du second commutateur ; et/ou l'écart temporel entre i) la chute en dessous de la valeur seuil de tension inférieure du signal de tension mesuré ; et ii) l'ouverture consécutive du second commutateur et la fermeture du premier commutateur ;
déterminer un facteur de compensation sur la base de l'erreur temporelle ; et
multiplier le signal de courant mesuré par le facteur de compensation pour déterminer la signalisation de correction de tension.

8. Contrôleur selon la revendication 7, dans lequel :

le convertisseur résonant comprend un nœud de demi-pont au niveau de la connexion en série entre le premier commutateur et le deuxième commutateur ;
le contrôleur est configuré pour :
déterminer l'erreur temporelle sur la base des éléments suivants :

l'écart temporel entre i) le dépassement de la valeur seuil de tension supérieure par le signal de tension mesuré ; et ii) le moment auquel la tension au nœud de demi-pont chute ensuite en dessous d'un niveau qui est égal à la moitié de la tension d'alimentation ; et/ou l'écart temporel entre i) la chute en dessous de la valeur seuil de tension inférieure du signal de tension mesuré ;

et ii) le moment auquel la tension au nœud de demi-pont dépasse ensuite un niveau qui est égal à la moitié de la tension d'alimentation.

9. Contrôleur selon l'une quelconque des revendications 1 à 3 et 5 à 8, le contrôleur étant configuré pour :

stocker en tant que valeur de courant échantillonné la valeur du signal de courant mesuré au moment où la tension au nœud de demi-pont franchit la moitié de la tension d'alimentation pendant un cycle de commutation précédent ;
multiplier la valeur de courant échantillonné par le facteur de compensation pour déterminer la signalisation de correction de tension.

10. Contrôleur selon la revendication 9, le contrôleur étant configuré pour :

filtrer des valeurs de courant échantillonné au moment où la tension au nœud de demi-pont franchit la moitié de la tension d'alimentation pendant plusieurs cycles de commutation précédents pour fournir une valeur de courant échantillonné moyenne ; et
multiplier la valeur de courant échantillonné moyenne par le facteur de compensation pour déterminer la signalisation de correction de tension.

11. Contrôleur selon les revendications 2 à 4, le contrôleur étant configuré pour :

ajouter la signalisation de correction de tension audit signal de tension pour fournir un signal de tension corrigé de côté haut ;
soustraire la signalisation de correction de tension dudit signal de tension pour fournir un signal de tension corrigé de côté bas ;
en réponse au dépassement de la valeur seuil de tension supérieure par le signal de tension corrigé de côté haut, ouvrir le premier commutateur et fermer le second commutateur ; et
en réponse à la chute du signal de tension corrigé de côté bas en dessous de la valeur seuil de tension inférieure, ouvrir le second commutateur et fermer le premier commutateur.

12. Procédé de commande d'un convertisseur résonant, dans lequel le convertisseur résonant comprend :

un premier commutateur (102, 502) et un second commutateur (103, 503) connectés en série l'un à l'autre entre la source d'alimentation (104, Vs) et une borne de référence (105) ; et
un réservoir résonant connecté électriquement aux premier et second commutateurs, dans lequel le réservoir résonant comprend un condensateur résonant (107, Cr) ;
le procédé comprenant :

la détermination d'une signalisation de correction de tension (dV) à partir d'un signal de courant mesuré (SNSCUR), qui représente un courant circulant dans le réservoir résonant ;
soit dériver un signal de tension (Vcap) à partir dudit signal de courant mesuré, soit mesurer ledit signal de tension, qui représente une tension en un point prédéterminé dans le réservoir résonant ; et
en réponse au franchissement par le signal de tension d'une valeur seuil de tension (Vhs(SNSCAP), Vls(SNSCAP)), après l'application de la signalisation de correction de tension au signal de tension ou à la valeur seuil de tension en décalage, modifier l'état du premier commutateur et du second commutateur.

13. Procédé selon la revendication 12, comprenant en outre :

la combinaison de la signalisation de correction de tension avec le signal de tension mesuré pour fournir une signalisation de tension corrigée (Vcap_corr), dans lequel le signal de tension mesuré représente la tension en un point prédéterminé dans le réservoir résonant ;
en réponse au dépassement d'une valeur seuil de tension supérieure par la signalisation de tension corrigée, l'ouverture du premier commutateur et la fermeture du second commutateur ; et
en réponse à la chute de la signalisation de tension corrigée en dessous de la valeur seuil de tension inférieure, l'ouverture du second commutateur et la fermeture du premier commutateur.

## Figure 1a

## Figure 1b

# Figure 2

EP 4 560 902 B1

Figure 3

# Figure 4

# Figure 5

EP 4 560 902 B1

Figure 6

Figure 7

$$\frac{\tan\left(2\cdot\pi\cdot f\cdot 150\cdot 10^{-9}\right)}{2\cdot\pi\cdot f}$$

Figure 8

Vcap_corr

proper delay correction

Based on dv/dt at
switching moment t2

Figure 9

Figure 10

Figure 11

Figure 12

Figure 13

Figure 14

1451

determining voltage-correction-signalling (dV)

1421

combining the voltage-correction-signalling (dV)
with a measured voltage signal (Vcap) to provide
corrected-voltage-signalling

1453

in response to the corrected-voltage-signalling
exceeding an upper voltage threshold value
(Vhs), opening the first switch and
closing the second switch

1454

in response to the corrected-voltage-signalling
dropping below the lower voltage threshold
value (Vls), opening the second switch
and closing the first switch

**EP 4 560 902 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2023056448 A1
- EP 2661804 A1
- US 202019515 A1
- US 2007018618 A1